# EUROPEAN PATENT SPECIFICATION

(11) **EP 1 647 249 B1**
(45) Date of publication and mention of the grant of the patent: **08.08.2007**
(21) Application number: 05022380.9
(22) Date of filing: 13.10.2005
(51) Int. Cl.: A61G 7/10

(54) **Attachment device**
Befestigungsvorrichtung
Dispositif de fixation

(30) Priority: 14.10.2004 GB 0422790
(43) Date of publication of application: 19.04.2006
(73) Proprietor: Sunrise Medical HHG Inc., Longmont, Colorado 80503 (US)
(72) Inventor: McWattie, Nathan, Cheltenham, Gloucester GL52 9RD (GB); Hollingworth, Phillip, Mid Levels (HK); Gardener, John, Banbury, Oxfordshire OX15 4JQ (GB)
(74) Representative: Wardley, Diana Mary

(56) References cited:
- EP-A- 1 440 676
- GB-A- 2 293 857
- US-A- 4 712 257

## Description

### Description of Invention

This invention relates to an attachment device for attaching a lifting sling to a hoist. The lifting sling is used to lift and support a person such as an invalid or patient (see document GB-A-2 293 857).

A lifting sling is usually attached to a hoist by providing the sling with a number of elongate flexible connecting elements which are each at one end secured to the flexible sheet material from which the sling is made and at the other end provided with an attachment device for engagement with an attachment formation on the hoist. The flexible connecting elements may be flexible strap elements made of a woven textile tape or length of webbing, of sufficient strength to carry the load to which it is likely to be subject in use. There may be two such connecting elements and attachment devices one at each side of the sling in a region thereof which is in the vicinity of the shoulders of a person being supported by the sling in use, and further two such connecting elements and attachment devices may be provided at respective parts of the sling which lie in the lower torso or upper leg region of a person supported by the sling, in use.

It is known that each of the attachment formations on the hoist (usually on a load-carrying cradle carried by the hoist) can comprise a headed stud, and each attachment device engageable therewith can comprise a keyhole slot or the like, having a first portion through which the head of the stud can pass and a second portion which can be entered by a body part of the headed stud after the head has been passed through the first portion, but through which the head of the stud cannot pass. When a part of the weight of a person is being carried by such an attachment device, the body of the headed stud is held in the second portion of the opening so that the attachment device cannot come off the stud. It has also been proposed that various locking or latching devices cannot be provided in association with such an attachment device, to provide greater security against unintentional disengagement of the attachment device from the headed stud.

It is broadly an object of the present invention to provide an improved form of attachment device for engagement with an attachment formation in the form of a headed stud, which not only provides a high degree of resistance to unintentional disengagement but also provides a clearly-visible indication as to when it is correctly engaged and thus offers the maximum resistance to unintentional disconnection.

Accordingly to the present invention, there is provided an attachment device for attaching a sling to a hoist by engaging with an attachment formation on the hoist, which attachment formation comprises a body part and enlarged head, the attachment device being adapted to have a sling-connecting element attached to it and comprising
first and second elements disposed in face to face relationship with one another and moveable relative to one another between first and second positions;
the first element comprising a slot having a first portion through which the head of the attachment formation will pass and a second portion extending from the first portion and through which the body of the attachment portion can pass but through which the head will not pass;
the second element having an opening through which the head of the attachment formation can pass and which aligns with the first portion of the slot in the first element when the first and second elements are in their first relative position and which aligns with the second portion of the slot when the first and second elements are in their second relative position, in which position the second element blocks the first portion of the slot in the first element;
the first and second elements having formations which are able to receive a retaining element when the first and second elements are in their second relative position to hold them in such position.

The formations may be respective apertures which register with one another when the elements are in their second relative position but do not register when the elements are in their first relative position.

For attachment of the sling-connecting element to it, the attachment device may comprise apertures in the first and second elements which are in alignment with one another to receive the sling-connecting element, which may be a flexible strap or like element, when the first and second elements are in both their first and second positions relative to one another and in positions therebetween.

The first element of the attachment device may comprise two portions disposed in spaced parallel relationship to one another between which the second element is received. The second element may be slideable linearly between the spaced parts of the first element.

The first element may be of plastics material, and the second element of sheet metal.

When the first and second elements are in their second relative position, a part of the second element may protrude outwardly beyond a part of the first element, and such part of the second element may be coloured or bear some indicia to indicate that the first and second elements are in their second position relative to one another, indicating safe and full engagement of the attachment device with the attachment formation on the hoist.

The apertures in the first and second elements may be adapted to receive a retaining element in the form of a free end part of a further length of the flexible strap material which is used for the connecting element by which the attachment device is connected to the sling. Such a length of the material may be provided in association with the sling-connecting element, and may be a distinctive colour or otherwise be readily noticeable when it is passed through the first and second apertures, to indicate that the first and second elements are in their second relative position and correctly engaged with the attachment formation on the hoist. The retaining element resists movement of the first and second elements from such position because it would have to be sheared for the elements to move back to their first relative position in which the apertures in the elements do not register with one another.

The second element may be provided with an aperture of sufficient size to align with the first aperture in the first element when the elements are in their second position, and align with an opening in the first element for receiving the connecting element when the first and second elements are in both their relative positions.

A detent or the like may be provided, operative between the first and second elements to resist relative movement therebetween from their second relative position to their first relative position.

The invention will now be described by way of example with reference to the accompanying drawings, of which
FIGURE 1 is a side view of an attachment device in accordance with one embodiment of the invention, in a first operative position.
FIGURE 2 is a view as figure 1, but in a second operative position.
FIGURES 3a and 3b respectively illustrate an attachment formation and the attachment device in use.
FIGURE 4 illustrates a lifting sling connected to a part of an invalid hoist using attachment devices in accordance with the invention.
FIGURE 5 illustrates an alternative attachment formation.
FIGURE 6 is a side view of an attachment device in accordance with an alternative embodiment of the invention, in a first operative position.
FIGURE 7 is a view as Figure 6, but in a second operative position.

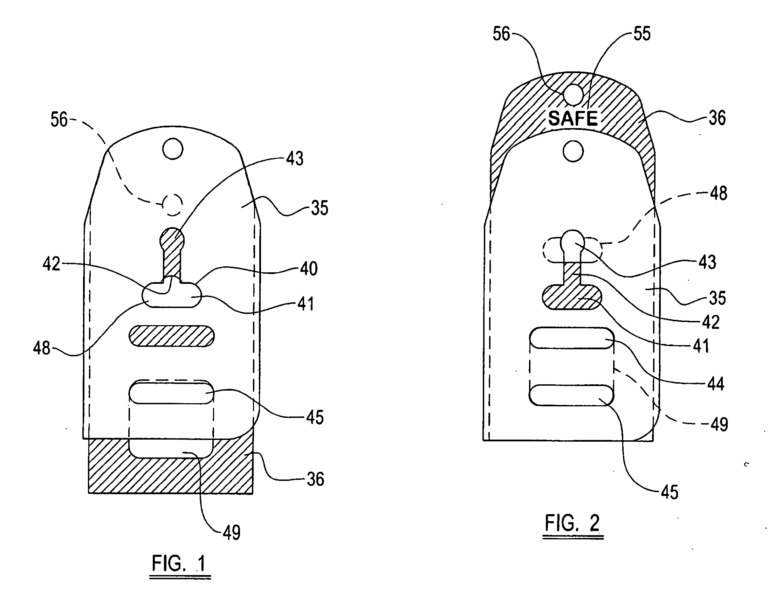

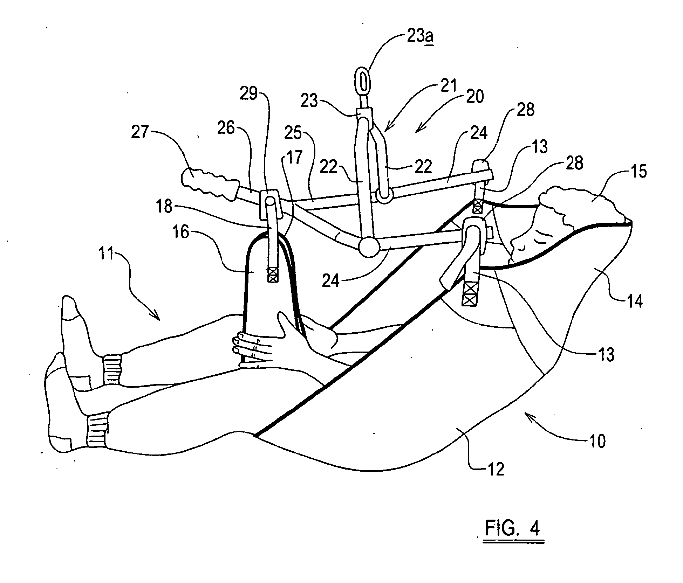

An attachment device shown in Figures 1, 2 and 3b is intended for use to connect a lifting sling to a hoist such as an invalid hoist, in the manner shown in Figure 4. Figure 4 shows a sling indicated generally at 10, which is made of a flexible sheet material such as a woven fabric of sufficient strength to carry the loads to which it is to be subjected in use. Alternatively the sling or part thereof may be of a netting material, or may comprise two or more layers of material with a padding material therebetween. The sling is illustrated with a person e.g. a patient 11 supported therein and the sling comprises a part 12 which supports the torso of the person 11. The part 12 of the sling is provided, in the vicinity of the shoulders of the person 11, with laterally spaced connecting elements 13 which are in the form of straps or tapes made of a suitably strong flexible material, e.g. a webbing material made of an artificial fibre. The connecting elements 13 are sewn to the material of which the sling 10 is made. Beyond the regions where the connecting elements 13 are attached to the sling, the sling has a head support portion 14 for supporting the head 15 of the person 11.

The main part 12 of the sling extends to a region generally beneath the lower torso/upper legs of the person 11, and then is bifurcated to afford two elongate leg-support portions 16, 17 which are passed beneath the respective upper legs/thighs of the person 11 and upwardly between the legs to the illustrated position. Each of the leg-support portions 16, 17 is provided at its end with a flexible connecting element like the connecting elements 13: such a connecting element is indicated at 18 at the end of the leg support portion 16.

The sling is made from one or more pieces of the flexible sheet material, cut and joined together e.g. by stitching to give the sling a three dimensional shape which comfortably supports the person 11 held by the sling 10.

The sling is arranged to be connected to the hoist, such as an invalid hoist, and in Figure 4 the sling is shown connected to a supporting cradle indicated generally at 20.

The cradle 20 comprises a member 21 which is generally of inverted U-shape, having a pair of limbs 22 which extend outwardly and downwardly from a member 23 provided with a formation 23a enabling it to be connected to the jib of a hoist. Such connection may provide for pivoting of the member 21 relative to the jib of the hoist, about a generally vertical axis. The bottom ends of the limbs 22 are connected, for pivoting about a generally horizontal axis, to spaced limbs 24 of a somewhat Y-shaped carrying member 25. The spaced limbs 24 of the γ-shaped member 25, join into a single limb 26 which ends in a handle 27. The connecting elements 13 and 18 are each provided with an attachment device for engagement with attachment formations on the carrying member 25, and the attachment devices on the connecting elements 13 are indicated at 28 and that on the visible connecting element 18 is indicated at 29, all the attachment devices being the same as one another. Attachment formations on the carrying member 25, with which the attachment devices are engagable, are provided adjacent the free ends of the spaced limbs 24, facing outwardly from one another, and on opposite sides of the limb 26.

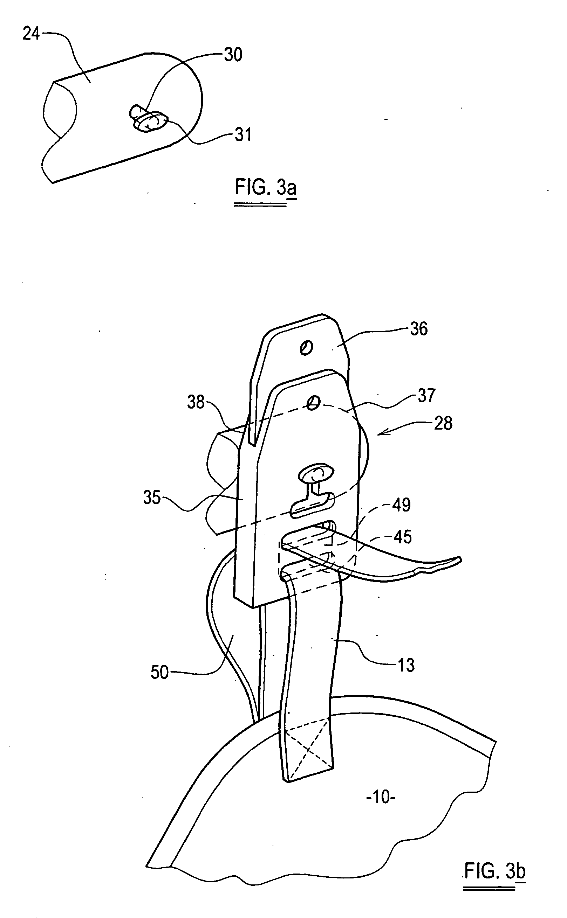

Referring now to Figures 1 to 3 of the drawings, one of the attachment formations on the member 25, such as that adjacent the end of the limb 24, is shown in Figure 3a. It comprises a headed stud with a body part 30 of cylindrical form, ending in a somewhat elliptical head 31.

Each attachment device 28 or 29 comprises a first element 35 and a second element 36 moveable relative to the first element 35. The first element 35 is of plastics material and comprises spaced parallel walls 37, 38 joined at their upwardly extending (having regard to the normal orientation of the attachment device in use and in which it is illustrated in the drawings) edges to define a narrow passage extending upwardly and downwardly through the first element and in which the second element is received. The second element 36 is a metal plate.

The first element 35 has a slot 40 extending through both of its walls, from its front to rear face, the slot 40 having a first portion 41 through which the head 31 of the attachment formation is able to pass through the first element. A second portion 42 of the slot 40 extends upwardly from the portion 41, and has a closed upper end 43 of slightly enlarged width compared with the width of the portion 42 adjacent the portion 41. Beneath the portion 41 of the slot, the first element 35 has a first aperture 44 extending through it, the aperture 44 being relatively wide but of low height, and beneath the first aperture 44 there is an aperture 45 for co-operation with the connecting element as 13 or 18.

The second element 36 is provided with an opening 48 whose shape is most clearly seen in Figure 2 (shown in broken lines). The shape corresponds to that of the lowermost part of the slot 40, including the first portion 41 thereof and an adjacent lowermost part of the second portion 42. Beneath the opening 48, the second element 36 has a large generally square aperture 49.

Figure 3b shows the attachment device 28 fitted to one of the connecting elements 13, which comprises a length of flexible strap material extending through the aperture 45 in the first element 35, and also through the square aperture 49 in the second element 36 within the first element 35. The free ends of the flexible connecting element 13 are connected to the sling 10, being sewn thereto adjacent its edge. A further flexible strap or tape element 50 forming a retaining element is also connected to the sling 10 at or adjacent where the connecting element 13 is connected to the sling. As depicted in Figure 3b, when the attachment device is connected to the attachment formation 30, 31 on the hoist the free end of the retaining element 50 is passed through the aperture 44 in the connecting element, but to achieve this position the following procedure has to be adopted.

The second element 36 is moveable relative to the first element 35 of the attachment device between a first position in which it is shown in Figure 1 and a second position in which it is shown in Figure 2. In the first position, the opening 48 in the second element 36 aligns with the lowermost portion of the slot 40 in the first element 35, whilst the aperture 44 in the first element 35 is blocked by the second element 36. The aperture 45 in the first element 35 lies adjacent the top of the square aperture 49 in the second element. In this position, the head 31 of the attachment formation is able to be passed through the aligned opening 48 and the lower portion of slot 40.

Then the connecting element 13 and hence the first element 35 of the attachment device can be pulled downwardly relative to the second element 36 of the attachment device. The position shown in Figures 2 and 3b is attained, in which the body 30 of the attachment formation lies in the slightly enlarged upper end 43 of the slot 40 in the second element. The remainder of the slot 40 in the second element is blocked by the element 36 beneath its opening 48. The top of the square aperture 49 in the element 36 aligns with the aperture 44 in the first element 35, so that the free end of the safety retaining element 50 can be passed through the through-opening thus afforded, as shown in Figure 3b. The presence of the safety retaining element 50 at least resists and preferably altogether prevents movement of the first and second elements 35, 36 from the position shown in Figures 2 and 3b. Thus the attachment device is held captive to the attachment formation 30, 31 with disengagement therefrom impossible unless the safety retaining element is firstly moved out of the aligned aperture 44, 49.

It will be noted that in this condition the aperture 45 in the first element 35 aligns with the bottom of square aperture 49 in the second element 36, so the load on the connecting element 13 is borne by both the first and second elements 35, 36.

The part of the second element 36 which protrudes above the first element 35 may be provided with a visible indication of its being in that position, e.g. a noticeable colour or a printed indication such as indicated at 55 in Figure 2 to indicate that the attachment device has reached a safely attached condition. A detent, catch or the like as indicated at 56 may be provided operable between the first and second elements 35, 36 further to provide security against their moving from the relative position shown in Figures 2 and 3b. The safety retaining element 50 may be a bright colour or otherwise be arranged to be readily noticeable when it is in position as shown in Figure 3b, so the safely-attached condition of the attachment device is visible at a glance.

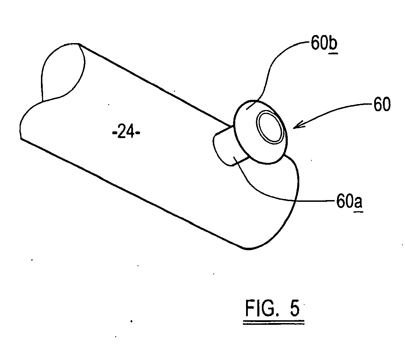

In Figure 5, there is illustrated an alternative attachment formation 60 on the member 25, such as that adjacent the end of one of the limbs 24, is shown in the drawing. It comprises a headed stud with a body part 60a of cylindrical form, ending in a somewhat cylindrical head 60b.

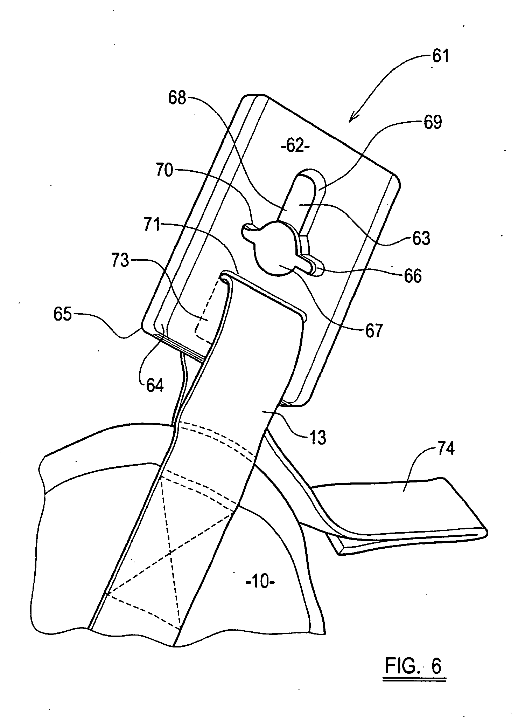

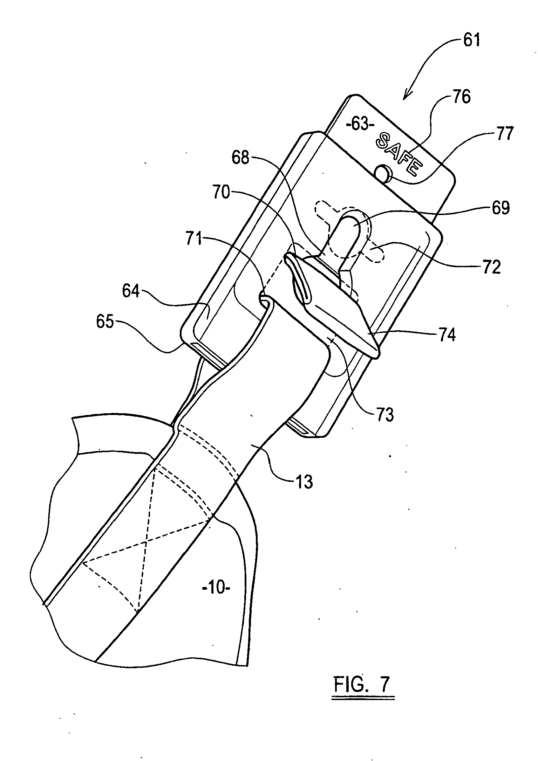

An alternative attachment device 61 is illustrated in Figures 6 and 7, and comprises a first element 62 and a second element 63 moveable relative to the first element 62. The first element 62 may be of plastics material and may comprise spaced parallel walls 64, 65 joined at their upwardly extending (having regard to the normal orientation of the attachment device in use and in which it is illustrated in the drawings) edges to define a narrow passage extending upwardly and downwardly through the first element and in which the second element is received. The second element 63 is preferably a metal plate, although may be formed of other suitable materials.

The first element 62 has a slot 66 extending through both of its walls, from its front face to its rear face, the slot 66 having a first portion 67 through which the head 60b of the attachment formation 60 is able to pass through the first element 62. A second portion 68 of the slot 66 extends upwardly from the portion 67, and has a closed upper end 69. The portion 67 of the slot has lateral extensions to form a first aperture 70 extending through first element 62, the aperture 70 being relatively wide but of low height, and beneath the first aperture 70 there is an aperture 71 for co-operation with the connecting element as 13 or 18.

The second element 63 is provided with an opening 72 whose shape is most clearly seen in Figure 7 (shown in broken lines). The shape corresponds to that of the lowermost part of the slot 66, including the first portion 67 thereof and an adjacent lowermost part of the second portion 68. Beneath the opening 72, the second element 63 has a large generally square aperture 73.

Figure 6 shows the attachment device 61 fitted to one of the connecting elements 13, which comprises a length of flexible strap material extending through the aperture 71 in the first element 62, and also through the rectangular aperture 73 in the second element 63 within the first element 62. The free ends of the flexible connecting element 13 are connected to the sling 10, being sewn thereto adjacent its edge. As depicted in Figure 7, when the attachment device 61 is connected to the attachment formation 60 on the hoist the free end of a retaining element 74 is passed through the aperture 70 in the connecting element, but to achieve this position the following procedure has to be adopted.

The second element 63 is moveable relative to the first element 62 of the attachment device between a first position in which it is shown in Figure 6 and a second position in which it is shown in Figure 7. In the first position, the opening 72 in the second element 63 aligns with the lowermost portion of the slot 66 in the first element 62, whilst the aperture 70 in the first element 62 is blocked by the second element 63. The aperture 71 in the first element 62 lies adjacent the top of the square aperture 73 in the second element 63. In this position, the head 60b of the attachment formation 60 is able to be passed through the aligned opening 72 and the lower portion of slot 66.

Then the connecting element 13 and hence the first element 62 of the attachment device can be pulled downwardly relative to the second element 63 of the attachment device. The position shown in Figure 7 is attained, in which the body 60a of the attachment formation 60 lies in the slightly enlarged upper end 69 of the slot 66 in the second element. The remainder of the slot 66 in the second element 63 is blocked by the element 63 beneath its opening 72. The top of the square aperture 73 in the element 63 aligns with the aperture 70 in the first element 62, so that the free end of the safety retaining element 74 can be passed through the through-opening thus afforded, as shown in Figure 7. The presence of the safety retaining element 74 at least resists and preferably altogether prevents movement of the first and second elements 62, 63 from the position shown in Figure 7. Thus the attachment device is held captive to the attachment formation 60 with disengagement therefrom impossible unless the safety retaining element 74 is firstly moved out of the aligned aperture 70, 73.

It will be noted that in this condition the aperture 71 in the first element 62 aligns with the bottom of square aperture 73 in the second element 63, so the load on the connecting element 13 is born by both the first and second elements 62, 63.

The part of the second element 63 which protrudes above the first element 62 may be provided with a visible indication of its being in that position (e.g. a noticeable color or a printed indication), such as indicated at 76 in Figure 7, to indicate that the attachment device has reached a safely attached condition. A detent, catch or the like, as indicated at 77, may be provided operable between the first and second elements 62, 63 further to provide security against their moving from the relative position shown in Figure 7. The safety retaining element 74 may be a bright color or otherwise be arranged to be readily noticeable when it is in position as shown in Figure 7, so the safely attached condition of the attachment device is visible at a glance.

The invention thus provides an attachment device which is easy to operate and provides a high degree of safety in use.

When used in this specification and claims, the terms "comprises" and "comprising" and variations thereof mean that the specified features, steps or integers are included. The terms are not to be interpreted to exclude the presence of other features, steps or components.

## Claims

1. An attachment device for attaching a sling to a hoist by engaging with an attachment formation on the hoist, which attachment formation comprises a body part (30; 60a) and enlarged head(31; 60b), the attachment device being adapted to have a sling-connecting element (13) attached to it and being **characterised by** comprising
first and second elements (35, 36; 62, 63) disposed in face to face relationship with one another and moveable relative to one another between first and second positions;
the first element comprising a slot (40; 66) having a first portion (41; 67) through which the head of the attachment formation will pass and a second portion (42, 68) extending from the first portion and through which the body of the attachment portion can pass but through which the head will not pass;
the second element having an opening (48; 72) through which the head of the attachment formation can pass and which aligns with the first portion (41; 67) of the slot in the first element when the first and second elements are in their first relative position and which aligns with the second portion (42; 68) of the slot when the first and second elements are in their second relative position, in which position the second element blocks the first portion of the slot in the first element;
the first and second elements having formations (44, 49; 70, 73) which are able to receive a retaining element when the first and second elements are in their second relative position to hold them in such position.

2. An attachment device according to claim 1 wherein the formations comprise respective apertures which register with one another when the elements are in their second relative position but do not register when the elements are in their first relative position.

3. An attachment device according to claim 1 or claim 2 comprising apertures in the first and second elements which are in alignment with one another to receive the sling connecting element when the first and second elements are in both their first and their second positions relative to one another and in positions therebetween.

4. An attachment device according to any one of the preceding claims having a sling-connecting element comprising a flexible strap element.

5. An attachment device according to any one of the preceding claims wherein the first element comprises two portions disposed in spaced parallel to one another and between which the second element is received.

6. An attachment device according to claim 5 wherein the second element is slideable linearly between the spaced parts of the first element.

7. An attachment device according to claim 5 or claim 6 wherein the first element is of plastics material and the second element of metal.

8. An attachment device according to any one of the preceding claims wherein, when the first and second elements are in their second relative position, a part of the second element extends outwardly beyond a part of the first element.

9. An attachment device according to claim 8 wherein said part of the second element is coloured or bears some indicia to provide a visual indication that the first and second element are in their second position relative to one another.

10. An attachment device according to any one of the preceding claims wherein the apertures in the first and second elements are adapted to receive a retaining element in the form of a free end part of a length of flexible strap material.

11. An attachment device according to claim 4 or any claim appendent thereto comprising an additional length of the material of the sling-connecting element, constituting the retaining element.

12. An attachment device according to claim 11 wherein said material constituting the retaining element has a distinctive colour or other aspect of its appearance.

13. An attachment device according to any one of the preceding claims wherein the second element has an aperture of sufficient size to align with an aperture in the first element to receive the retaining element when the first and second elements are in their second relative position, and to align with an aperture in the first element to receive the sling connecting element when the first and second elements are in both their first and second relative position.

14. An attachment device according to any one of the preceding claims wherein a detent, catch, or the like, is provided, operative between the first and second elements to resist relative movement therebetween from their second relative position to their first relative position.

## Patentansprüche

1. Befestigungsvorrichtung für das Befestigen einer Schlinge an einer Hebevorrichtung durch einen Eingriff in eine Befestigungsanordnung an der Hebevorrichtung, wobei die Befestigungsanordnung ein Körper-Teil (30; 60a) und einen vergrößerten Kopf (31; 60b) umfaßt, die Befestigungsvorrichtung für die Befestigung eines Schlingen-Verbindungselements (13) an dieser geeignet ist und **dadurch gekennzeichnet ist, daß** sie umfaßt
ein erstes und ein zweites Element (35, 36; 62, 63), die einander zugewandt angeordnet sind und relativ zueinander zwischen ersten und zweiten Positionen bewegbar sind;
wobei das erste Element einen Schlitz (40; 66) umfaßt, der einen ersten Abschnitt (41; 67) aufweist, durch welchen der Kopf der Befestigungsanordnung hindurchgeht, und einen zweiten Abschnitt (42; 68), der sich von dem ersten Abschnitt aus erstreckt und durch welchen der Körper des Befestigungsabschnitts hindurchgehen kann, durch den jedoch der Kopf nicht hindurchgeht;
das zweite Element eine Öffnung (48; 72) aufweist, durch welche der Kopf der Befestigungsanordnung hindurchgehen kann und die sich mit dem ersten Abschnitt (41; 67) des Schlitzes im ersten Element ausrichtet, wenn sich das erste und das zweite Element in ihrer ersten relativen Position befinden, und die sich mit dem zweiten Abschnitt (42; 68) des Schlitzes ausrichtet, wenn sich das erste und das zweite Element in ihrer zweiten relativen Position befinden, wobei bei dieser Position das zweite Element den ersten Abschnitt des Schlitzes in dem ersten Element blockiert;
und das erste und das zweite Element Anordnungen (44, 49; 70, 73) aufweisen, die geeignet sind, ein Rückhalteelement aufzunehmen, wenn sich das erste und das zweite Element in ihrer zweiten relativen Position befinden, um sie in dieser Position zu halten.

2. Befestigungsvorrichtung nach Anspruch 1, **dadurch gekennzeichnet, daß** die Anordnungen entsprechende Öffnungen umfassen, die miteinander zusammenpassen, wenn sich die Elemente in ihrer zweiten relativen Position befinden, die jedoch nicht zusammenpassen, wenn sich die Elemente in ihrer ersten relativen Position befinden.

3. Befestigungsvorrichtung nach Anspruch 1 oder Anspruch 2, **gekennzeichnet durch** Öffnungen in dem ersten und in dem zweiten Element, die aneinander ausgerichtet sind, um das Schlingen-Verbindungselement aufzunehmen, wenn sich das erste Element und das zweite Element sowohl in ihrer ersten als auch in ihrer zweiten Position relativ zueinander und in Positionen zwischen denselben befinden.

4. Befestigungsvorrichtung nach einem der vorangehenden Ansprüche, **dadurch gekennzeichnet, daß**
die Befestigungsvorrichtung ein Schlingen-Verbindungselement aufweist, welches ein flexibles Gurt-Element umfaßt.

5. Befestigungsvorrichtung nach einem der vorangehenden Ansprüche, **dadurch gekennzeichnet, daß**
das erste Element zwei Abschnitte umfaßt, die beabstandet parallel zueinander angeordnet sind und zwischen denen das zweite Element aufgenommen wird.

6. Befestigungsvorrichtung nach Anspruch 5, **dadurch gekennzeichnet, daß** das zweite Element linear verschiebbar zwischen den beabstandeten Teilen des ersten Elements ist.

7. Befestigungsvorrichtung nach Anspruch 5 oder Anspruch 6, **dadurch gekennzeichnet, daß**
das erste Element Kunststoffmaterial umfaßt und das zweite Element Metall umfaßt.

8. Befestigungsvorrichtung nach einem der vorangehenden Ansprüche, **dadurch gekennzeichnet, daß**,
wenn sich das erste Element und das zweite Element in ihrer zweiten relativen Position befinden, ein Teil des zweiten Elements sich nach außen über einen Teil des ersten Elements hinaus erstreckt.

9. Befestigungsvorrichtung nach Anspruch 8, **dadurch gekennzeichnet, daß** der Teil des zweiten Elements farbig ist oder einige Hinweise trägt, um einen visuellen Hinweis darauf zu geben, daß sich das erste Element und das zweite Element in ihrer zweiten Position relativ zueinander befinden.

10. Befestigungsvorrichtung nach einem der vorangehenden Ansprüche, **dadurch gekennzeichnet, daß**
die Öffnungen in dem ersten und in dem zweiten Element geeignet sind, ein Rückhalteelement in Form eines freien Endteils einer Länge des flexiblen Gurt-Materials aufzunehmen.

11. Befestigungsvorrichtung nach Anspruch 4 oder einem von diesem abhängigen Anspruch, **dadurch gekennzeichnet, daß**
die Befestigungsvorrichtung eine zusätzliche Länge des Materials des Schlingen-Verbindungselements umfaßt, welche das Rückhalteelement bildet.

12. Befestigungsvorrichtung nach Anspruch 11, **dadurch gekennzeichnet, daß**
das Material, welches das Rückhalteelement bildet, eine auffallende Farbe oder einen anderen Aspekt seines Aussehens aufweist.

13. Befestigungsvorrichtung nach einem der vorangehenden Ansprüche, **dadurch gekennzeichnet, daß**
das zweite Element eine Öffnung mit einer Größe aufweist, die ausreicht, um sich mit einer Öffnung in dem ersten Element auszurichten, um das Rückhalteelement aufzunehmen, wenn das erste Element und das zweite Element sich in ihrer zweiten relativen Position befinden, und um sich mit einer Öffnung in dem ersten Element auszurichten, um das Schlingen-Verbindungselement aufzunehmen, wenn sich das erste Element und das zweite Element sowohl in ihrer ersten als auch in ihrer zweiten relativen Position befinden.

14. Befestigungsvorrichtung nach einem der vorangehenden Ansprüche, **dadurch gekennzeichnet, daß**
eine Arretierung, eine Sperre oder dergleichen bereitgestellt wird, wirksam zwischen dem ersten Element und dem zweiten Element, um relativer Bewegung zwischen diesen von ihrer zweiten relativen Position aus zu ihrer ersten relativen Position zu widerstehen.

## Revendications

1. Dispositif de fixation pour fixer une élingue sur un palan par l'engagement avec une formation de fixation sur le palan, laquelle formation de fixation comprend une partie de corps (30 ; 60a) et une tête élargie (31 ; 60b), le dispositif de fixation étant adapté pour qu'un élément de connexion d'élingue (13) lui soit rattaché et étant **caractérisé par** le fait de comprendre
des premier et second éléments (35, 36 ; 62, 63) disposés dans une relation de face à face l'un avec l'autre et mobiles l'un par rapport à l'autre entre des première et seconde positions ;
le premier élément comprenant une fente (40 ; 66) ayant une première partie (41 ; 67) à travers laquelle la tête de la formation de fixation sera passée et une seconde partie (42 ; 68) s'étendant à partir de la première partie et à travers laquelle le corps de la partie de fixation peut passer, mais à travers laquelle la tête ne passera pas ;
le second élément ayant une ouverture (48 ; 72) à travers laquelle la tête de la formation de fixation peut passer et qui est alignée avec la première partie (41 ; 67) de la fente dans le premier élément lorsque les premier et second éléments sont dans leur première position relative et qui est alignée avec la seconde partie (42 ; 68) de la fente lorsque les premier et second éléments sont dans leur seconde position relative, position dans laquelle le second élément bloque la première partie de la fente dans le premier élément ;
les premier et second éléments ayant des formations (44, 49 ; 70, 73) qui sont capables de recevoir un élément de retenue lorsque les premier et second éléments sont dans leur seconde position relative pour les maintenir dans cette position.

2. Dispositif de fixation selon la revendication 1, dans lequel les formations comprennent des ouvertures respectives qui coïncident l'une avec l'autre lorsque les éléments sont dans leur seconde position relative, mais qui ne coïncident pas lorsque les éléments sont dans leur première position relative.

3. Dispositif de fixation selon la revendication 1 ou la revendication 2, comprenant des ouvertures dans les premier et second éléments qui sont alignées l'une avec l'autre pour recevoir l'élément de connexion d'élingue lorsque les premier et second éléments sont à la fois dans leurs première et seconde positions l'un par rapport à l'autre et dans des positions intermédiaires.

4. Dispositif de fixation selon l'une quelconque des revendications précédentes, ayant un élément de connexion d'élingue comprenant un élément de sangle souple.

5. Dispositif de fixation selon l'une quelconque des revendications précédentes, dans lequel le premier élément comprend deux parties disposées de manière espacée parallèlement l'une à l'autre et entre lesquelles le second élément est reçu.

6. Dispositif de fixation selon la revendication 5, dans lequel le second élément peut glisser linéairement entre les parties espacées du premier élément.

7. Dispositif de fixation selon la revendication 5 ou la revendication 6, dans lequel le premier élément est constitué d'un matériau plastique et le second élément de métal.

8. Dispositif de fixation selon l'une quelconque des revendications précédentes, dans lequel, lorsque les premier et second éléments sont dans leur seconde position relative, une partie du second élément s'étend vers l'extérieur au-delà d'une partie du premier élément.

9. Dispositif de fixation selon la revendication 8, dans lequel ladite partie du second élément est colorée ou porte des repères pour fournir une indication visuelle que les premier et second éléments sont dans leur seconde position l'un par rapport à l'autre.

10. Dispositif de fixation selon l'une quelconque des revendications précédentes, dans lequel les ouvertures dans les premier et second éléments sont adaptées pour recevoir un élément de retenue sous la forme d'une partie d'extrémité libre d'une longueur de matériau de sangle souple.

11. Dispositif de fixation selon la revendication 4 ou toute revendication annexée à celle-ci, comprenant une longueur supplémentaire du matériau de l'élément de connexion d'élingue, constituant l'élément de retenue.

12. Dispositif de fixation selon la revendication 11, dans lequel ledit matériau constituant l'élément de retenue a une couleur distinctive ou un autre aspect distinctif de son apparence.

13. Dispositif de fixation selon l'une quelconque des revendications précédentes, dans lequel le second élément a une ouverture d'une taille suffisante pour s'aligner avec une ouverture dans le premier élément pour recevoir l'élément de retenue lorsque les premier et second éléments sont dans leur seconde position relative, et pour s'aligner avec une ouverture dans le premier élément pour recevoir l'élément de connexion d'élingue lorsque les premier et second éléments sont à la fois dans leurs première et seconde positions relatives.

14. Dispositif de fixation selon l'une quelconque des revendications précédentes, dans lequel un cran, un loquet, ou autre de ce genre, est prévu, servant entre les premier et second éléments à résister au mouvement relatif entre ceux-ci, de leur seconde position relative à leur première position relative.
